# EUROPÄISCHE PATENTSCHRIFT

(11) **EP 1 599 794 B1**
(45) Veröffentlichungstag und Bekanntmachung des Hinweises auf die Patenterteilung: **18.02.2009**
(21) Anmeldenummer: 04715865.4
(22) Anmeldetag: 01.03.2004
(51) Int. Cl.: G06F 9/38, G06F 15/78

(54) **PROZESSOR MIT VERSCHIEDENARTIGEN STEUERWERKEN FÜR GEMEINSAM GENUTZTE RESSOURCEN**
PROCESSOR WITH DIFFERENT TYPES OF CONTROL UNITS FOR COMMONLY USED RESOURCES
PROCESSEUR A UNITES DE COMMANDES DIVERSES POUR DES RESSOURCES UTILISEES EN COMMUN

(30) Priorität: 05.03.2003 CH 342032003
(43) Veröffentlichungstag der Anmeldung: 30.11.2005
(73) Patentinhaber: Bridgeco AG, 8600 Duebendorf (CH)
(72) Erfinder: BÖSCH, Thomas, CH-6988 Ponte Tresa (CH); THALMANN, Markus, CH-8006 Zürich (CH); TRAMM, Matthias, CH-8321 Wildberg (CH)
(74) Vertreter: Bohest AG
(86) Internationale Anmeldenummer: PCT/CH2004/000106
(87) Internationale Veröffentlichungsnummer: WO 2004/079564

(56) Entgegenhaltungen:
- WO-A-99/31617
- US-B1- 6 438 737
- GORGON M ET AL: "FPGA based controller for heterogenous image processing svstem" DIGITAL SYSTEMS, DESIGN, 2001. PROCEEDINGS. EUROMICRO SYMPOSIUM ON SEPT. 4=6, 2001, PISCATAWAY, NJ, USA,IEEE, 2001, Seiten 453-457, XP010558501 ISBN: 0-7695-1239-9
- DAVID R ET AL: "DART: a dynamically reconfigurable architecture dealing with future mobile telecommunications constraints" PARALLEL AND DISTRIBUTED PROCESSING SYMPOSIUM., PROCEEDINGS INTERNATIONAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15. April 2002 (2002-04-15), Seiten 156-163, XP010591206 ISBN: 0-7695-1573-8

## Beschreibung

Die Erfindung betrifft einen Prozessor mit mehreren Steuerwerken gemäss dem Oberbegriff des unabhängigen Patentanspruchs.

Der inzwischen hohe Verbreitungsgrad von Multimedia-Geräten wie z.B. Audio-Video-Recorder, Digital-Kameras, DVD-Player etc. erfordert Kommunikationsnetzwerke, die in Echtzeit arbeiten. Um Daten von Multimedia-Anwendungen empfangen und übertragen zu können, sind hochintegrierte Systemschaltungen auf einem Chip erforderlich, sonst wären solche Multimedia-Anwendungen im privaten Bereich bezüglich Kosten oder Platzbedarf nicht möglich.

Dabei ist zu berücksichtigen, dass für solche Multimedia-Anwendungen typische Aufgaben wie Verschlüsselung/Entschlüsselung, Kompression/Dekompression, Signalverarbeitung, Filterung oder Transportformatierung (Framing) sehr hohe Anforderungen an die Rechenleistung stellen. Während Aufgaben der Signalverarbeitung typischerweise durch arithmetisch-logische Operationen mit fester Wortgrösse gelöst werden, handelt es sich zum Beispiel bei kryptographischen Aufgaben oder dem in der Videokompression verwendeten "Variable Length Coding" um Bit-orientierte Operationen, wo also mit bestimmten Bits aus einem Datenstrom heraus bestimmte Operationen durchzuführen sind, aber kaum arithmetische Operationen mit konstanten Wortgrössen ausgeführt werden, bzw. bei einer Transportformatierung um das Herausfiltern ganz bestimmter Bits oder Bitmuster aus einem Datenstrom.

Hohe Rechenleistungen lassen sich mit speziell auf die jeweilige Aufgabe bzw. Anwendung zugeschnittener Hardware erreichen (sogenannte ASHW - Application Specific Hardware), welche in der Regel in ASICs (Application Specific Integrated Circuits) integriert wird. Solche ASHW überzeugt durch ihre hohe Rechenleistung, ist aber wenig flexibel (sie ist eben genau auf diejenigen Aufgaben zugeschnitten, die mit ihr durchgeführt werden soll, aber wenig oder nicht geeignet für andere Arten von Aufgaben). Ausserdem beinhalten ASHW-Blöcke ein hohes Risiko, denn wenn im Chip-Design eines ASIC ein Fehler enthalten sein sollte, was selbst bei den heute zum Einsatz kommenden, hoch entwickelten Möglichkeiten beim Chip-Design und bei der Simulation der Arbeitsweise des Chips noch vor der endgültigen Freigabe des Chip-Designs für die Produktion noch vorkommen kann, kann eine ganze Charge von Chips zu Ausschuss werden, was erheblichen finanziellen Schaden zur Folge hat.

Rekonfigurierbare Hardware hingegen ermöglicht eine hohe Rechenleistung, ohne dabei die Flexibilität zu verlieren, ihre Funktionalität nach physischer Herstellung der Hardware ändern zu können. Die Funktionalität der rekonfigurierbaren Hardware wird dabei derart festgelegt, dass Konfigurationsdaten in statische RAM-Zellen der rekonfigurierbaren Hardware geladen werden, die dann das Verhalten der rekonfigurierbaren Hardware insgesamt steuern. Durch dynamisches Laden verschiedener Konfigurationsdaten ist es zum Teil möglich, die Funktionalität der rekonfigurierbaren Hardware während des Betriebs zu ändern, ohne dabei die Datenverarbeitung unterbrechen zu müssen.

Alternativ zur Konfiguration mittels statischen RAM-Zellen könnten auch Lösungen unter Verwendung der Anti-Fuse- oder Flash-Technologie oder auch durch die Metallmaske definierte Konfigurationen eingesetzt werden.

Um die Flexibilität der Hardware insgesamt noch weiter zu erhöhen, kann die rekonfigurierbare Hardware mit einem konventionellen Prozessor (CPU - Central Processing Unit) gekoppelt werden. Einfache, aber dennoch rechenintensive Aufgaben eines Algorithmus können dann beispielsweise aus der CPU ausgelagert werden (die in dieser Zeit für andere Aufgaben verwendet werden kann). Somit kann die Rechenleistung der Hardware insgesamt weiter verbessert werden.

Bei rekonfigurierbarer Hardware unterscheidet man sogenannte grobkörnige Hardware-Strukturen von sogenannten feinkörnigen Hardware-Strukturen.

Unter grobkörnigen (CG - Coarse Grained) Hardware-Strukturen versteht man ein- oder zweidimensionale Netzwerke von klar abgegrenzten arithmetischen Operationsblöcken (z.B. ALU's - Arithmetic Logical Units; MAC's - Multiplier ACcumulator; Addierer), die über ein Interkommunikations-Netzwerk miteinander verbunden sind. Diese grobkörnigen Hardware-Strukturen sind räumlich betrachtet (also im Hinblick auf die benötigte Fläche Silizium) verhältnismässig klein und führen ihre Operationen schnell aus. Allerdings sind sie unflexibel in Bezug auf ihre Funktionalität, verglichen mit feinkörnigen Strukturen, und erfordern in der Regel Operanden mit konstanter Wortlänge (heutzutage typischerweise Wortlängen von 32 Bit). Bit-orientierte Operationen sind mit solchen grobkörnigen Hardware-Strukturen generell mit hohem Rechenaufwand verbunden und somit nicht optimal.

Mit feinkörnigen (FG - Fine Grained) Hardware-Strukturen, wie sie typisch sind für FPGAs (Field Programmable Gate Arrays), lassen sich extrem viele unterschiedliche Funktionalitäten erreichen. Feinkörnige Strukturen bestehen typischerweise aus einer grossen Anzahl von kleinen oder kleinsten Logikblöcken - welche zum Teil auch LUTs (Look Up Tables) enthalten - die durch regelmässige und sehr flexible Verbindungen (interconnects) verbunden sind. Durch Programmierung lassen sich diese Logikblöcke und Verbindungen in der gewünschten Art für eine bestimmte Aufgabe konfigurieren. FPGAs haben aber auch Nachteile. So nehmen FPGAs räumlich betrachtet einen verhältnismässig grossen Platz ein (im Hinblick auf die benötigte Fläche Silizium) . Sie benötigen viel Speicher, um die erforderlichen Konfigurationsdaten zu speichern (weil ja nach Möglichkeit jeder einzelne Funktionsblock mit jedem anderen Funktionsblock in beliebiger Weise verknüpfbar sein soll). Gerade in Fällen, in denen die Rekonfiguration während des Betriebs (dynamisch) erfolgen soll, wo also die für die Rekonfiguration des FPGAs benötigte Zeit sehr kurz gehalten werden muss, sollten jedoch grosse Mengen an Rekonfigurationsdaten vermieden werden. Ausserdem ist zu erwähnen, dass arithmetische Operationen zwar grundsätzlich mit FG-Strukturen durchführbar sind, jedoch speziell bei grösseren Operanden (wie z.B. bei den vorerwähnten Operanden mit einer Wortgrösse von 32 Bit) erheblich langsamer sind als die zuvor diskutierten grobkörnigen Hardware-Strukturen, bedingt durch die notwendige sequenzielle Verknüpfung von kleinen Logikblöcken und die daraus resultierenden langen Signalpfade. Die Ausführungszeit für solche Operationen ist also deutlich grösser als für CG-Strukturen derselben Funktionalität. Alternativ zu FPGA-ähnlichen Strukturen können FG-Strukturen auch aus fest, d.h. nicht rekonfigurierbar, in Hardware realisierten Funktionseinheiten für z.B. Bitoperationen ausgebildet sein.

Aus den oben diskutierten Vor- und Nachteilen sind - wie bereits erwähnt - Konsequenzen gezogen worden, und so existieren bereits sogenannte "system on chip" Lösungen, bei denen auf einem einzigen Chip eine RISC CPU (Reduced Instruction Set Computer CPU) mit einer gemischt-körnigen rekonfigurierbaren Hardware-Einheit, einer RFU (Reconfigurable Functional Unit), verbunden ist. Die RFU umfasst dabei ein rekonfigurierbares Netzwerk RN (Reconfigurable Network), welches programmierbare Funktionsblöcke verschiedener Granularität miteinander verbindet. Bei diesen Funktionsblöcken handelt es sich einerseits um schnelle, räumlich kompakte, grobkörnige Blöcke, und andererseits um hochflexible, für Bit-orientierte Anwendungen geeignete, feinkörnige Blöcke (wie diese z.B. typisch sind für FPGAs). Mit solchen Chips ist es möglich, dass die CPU Rechenoperationen in die RFU auslagert, für deren Durchführung die CPU entweder mehr Zeit benötigen würde als die RFU, oder anstelle von deren Durchführung die CPU in dieser Zeit andere Aufgaben übernehmen kann.

Die Steuerung des Ablaufs der auszuführenden Operationen obliegt dabei grundsätzlich dem Steuerwerk der RISC CPU, welches die Reihenfolge der (insgesamt) auszuführenden Operationen bestimmt. Das Steuerwerk stellt also die Kontrolleinheit des Prozessors dar, welches die Datenverarbeitung in den Funktionsblöcken (egal, ob es sich dabei nun um Funktionsblöcke der CPU oder der RFU handelt) anhand eines Programms steuert. Das Steuerwerk einer CPU umfasst typischerweise einen Programm-Zähler und einen Dekodierer. Bei der Ausführung eines Programmschritts wird der dem aktuellen Wert des Programm-Zählers entsprechende Befehl aus einem Instruktionsspeicher geholt ("fetch") und vom Dekodierer dekodiert ("decode"), sodass die dem Befehl entsprechenden Funktionsblöcke und die entsprechenden Register angesprochen werden können. Das Steuerwerk einer CPU wird daher in der Folge als FD-Steuerwerk (Fetch Decode) bezeichnet. Die Ausführung der einzelnen Operationen kann grundsätzlich durch die Funktionsblöcke innerhalb der CPU erfolgen oder in die RFU ausgelagert werden.

Im Falle der Auslagerung von Operationen in die RFU übergibt das Steuerwerk ein Steuerwort an die RFU, durch welches festgelegt ist, welche der Funktionsblöcke der RFU welche Operationen mit welchen Operanden vornehmen sollen. Diese Operationen werden dann von den Funktionsblöcken der RFU (ALUs, MACs, FG, etc.) in der Regel viel schneller ausgeführt, und zudem sind die ausführenden Ressourcen der CPU in dieser Zeit frei für andere Operationen.

Für zahlreiche der heutigen Anwendungen (insbesondere z.B. die bereits erwähnten Multimedia-Anwendungen) ist die konventionelle Abarbeitung eines Algorithmus mit einer einzigen CPU zu langsam. Um die Geschwindigkeit zu erhöhen, mit welcher der Algorithmus abgearbeitet wird, ist man dazu übergegangen, mehrere Schritte oder ganze Teile eines Algorithmus parallel abzuarbeiten. Beispielsweise ist in der EP-A-1 148 414 vorgeschlagen worden, mehrere Teile (sogenannte "threads") eines Algorithmus parallel abzuarbeiten, wobei die parallel abgearbeiteten "threads" des Algorithmus von einer entsprechenden Anzahl gleichartiger CPUs abgearbeitet werden. Alternativ können dabei grundsätzlich sämtliche vorhandenen Funktionsblöcke von allen CPU-Steuerwerken, welche die einzelnen Schritte der jeweiligen "threads" parallel ausführen, genutzt werden. Allerdings bedingt dies, dass stets eine Zuweisung erfolgen muss, welche Funktionsblöcke von welchem Steuerwerk in welcher Weise genutzt werden. Dazu können verschiedene Kriterien zum Tragen kommen, beispielsweise können Prioritäten für bestimmte Teile des Algorithmus bei der Zuweisung der Funktionsblöcke berücksichtigt werden, oder es kann die jeweils aktuelle Verfügbarkeit der einzelnen Funktionsblöcke bei der Zuweisung berücksichtigt werden.

Die Steuerwerke von CPUs arbeiten aber nach dem oben bereits beschriebenen Prinzip ("fetch- decode", siehe oben). Insbesondere bei Operationen wie Verschlüsselung/Entschlüsselung, Kompression/Dekompression, Signalverarbeitung, Filterung oder "Framing" handelt es sich jedoch oft um kleine, aber oft wiederholte, rechenintensive Programmschleifen, die gleichzeitig einen relativ geringen Steueraufwand erfordern. Die komplette Abarbeitung solcher Aufgaben unter der Steuerung des FD-Steuerwerks der CPU ist daher suboptimal.

Hier setzt die vorliegende Erfindung an, indem sie einen Prozessor vorschlagen soll, der die Durchführung von vielen verschiedenen Operationen bei der Abarbeitung eines Algorithmus deutlich effizienter durchführen soll als dies durch die Bereitstellung von mehreren herkömmlichen CPUs möglich ist. Dazu wird erfindungsgemäss ein Prozessor vorgeschlagen, wie er durch die Merkmale des unabhängigen Patentanspruchs charakterisiert ist. Weitere vorteilhafte Ausgestaltungen des erfindungsgemässen Prozessors ergeben sich aus den Merkmalen der abhängigen Patentansprüche.

Insbesondere wird also vorgeschlagen, dass der Prozessor mehrere Steuerwerke umfasst, sowie mehrere Funktionsblöcke, auf welche die Steuerwerke gemeinsam zugreifen können. Eine zentrale Steuerung legt den Zugriff der Steuerwerke auf die Funktionsblöcke (Hardware-Ressourcen) fest. Mindestens zwei Steuerwerke sind dabei als Steuerwerke von verschiedenem Typ ausgebildet. Was unter verschiedenen Typen von Steuerwerken verstanden werden soll, wird weiter unten noch erläutert werden.

Bei einem Ausführungsbeispiel kann dabei mindestens ein Steuerwerk vom Typ "Fetch-Decode" sein, wie es beispielsweise auch in herkömmlichen CPUs vorkommt. Ein solches Steuerwerk umfasst typischerweise einen Programm-Zähler und einen Dekodierer. Im Betrieb holt dieses Steuerwerk einen dem aktuellen Zählerstand entsprechenden Befehl aus einem Instruktionsspeicher und dekodiert ihn im Dekodierer. Derartige Steuerwerke werden im Folgenden als FD-Steuerwerk bezeichnet. Bei einem solchen FD-Steuerwerk steht ein grosser Instruktionssatz (Befehlssatz) zur Verfügung, welcher in der Regel sämtliche Bedürfnisse der vorgesehenen Anwendungen abdeckt ("general purpose"-Instruktionssatz).

Ein davon verschiedener Typ von Steuerwerk arbeitet nach einem anderen Prinzip als ein herkömmliches FD-Steuerwerk einer CPU. Dieses nach einem anderen Prinzip arbeitende Steuerwerk erlaubt es, spezielle Aufgaben effizienter zu steuern als durch ein FD-Steuerwerk einer herkömmlichen CPU.

So kann bei einem Ausführungsbeispiel des erfindungsgemässen Prozessors mindestens ein Steuerwerk vom Typ "application specific Fetch Decode" sein. Ein solches anwendungsspezifisches Steuerwerk ist vom Prinzip her zwar ein FD-Steuerwerk, verwendet jedoch einen spezifisch auf gewisse Anwendungen zugeschnittenen und häufig stark reduzierten Instruktionssatz (Befehlssatz). Dieser Instruktionssatz - mit häufig deutlich weniger Instruktionen verglichen mit jenen, welche durch ein herkömmliches FD-Steuerwerk verarbeitet werden können - kann daher deutlich kompakter und daher speicher-effizienter ausgelegt werden als ein "general-purpose" Instruktionssatz. Im Folgenden wird dieses Steuerwerk daher als as-FD-Steuerwerk (application specific Fetch Decode) bezeichnet. Durch die kompaktere Form dieser Instruktionen, d.h. eine geringere Wortbreite, ist es daher auch möglich, den gesamten Programmcode lokal auf dem Chip zu speichern, was ein schnelles Abarbeiten der Instruktionen ohne Nachladen aus einem externen Speicher erlaubt (der Programmcode kann jedoch auch von einem externen Instruktionsspeicher geholt (fetch) werden). Weiter können als Massnahmen, wie es zum Beispiel beim Filtern von digitalen Audiodaten vorteilhaft ist, Befehle eingeführt werden wie zum Beispiel "post-increment/decrement" von Schleifen-Zähler-Variablen, welche das effizientere Bearbeiten der Daten ermöglichen. Zudem können auch spezielle Instruktionen geschaffen werden, welche gleichzeitig mehrere Zustandsüberprüfungen (z.B. von Flags) ermöglichen und gemäss dem Ergebnis der Überprüfung eine Aktion durchführen. Im Unterschied zum herkömmlichen FD-Steuerwerk fehlen aber in der Regel Instruktionen und Mechanismen wie zum Beispiel eine Interrupt-Verarbeitung, die für gewisse Anwendungen notwendig sind. Das Weglassen dieser Komponenten sowie die Möglichkeit, die Instruktionswortbreite zu reduzieren, macht diesen Typ Steuerwerk kompakter bezüglich der benötigten Chipfläche und effizienter bezüglich Verarbeitungsgeschwindigkeit für bestimmte Gruppen und Teile von Algorithmen als ein herkömmliches FD-Steuerwerk.

Bei einem weiteren Ausführungsbeispiel des erfindungsgemässen Prozessors kann mindestens ein Steuerwerk vom Typ "application specific Hardware" sein. Hierbei handelt es sich um ein in Hardware implementiertes, anwendungsspezifisches Steuerwerk. Diese Art von Steuerwerk umfasst spezifisch für eine Anwendung in Hardware implementierte Schaltungen. Ein solches Steuerwerk arbeitet nicht nach dem Prinzip "fetch-decode", wie dies bei den beiden bereits genannten Steuerwerken (FD;as-FD) der Fall ist. Die Ablaufsteuerung kann hier zum Beispiel durch eine oder mehrere, auch hierarchisch verschachtelte, in Hardware implementierte FSMs (Finite State Machines) bewerkstelligt werden, welche die Verarbeitung der Daten auf den gemeinsamen Hardware-Ressourcen für einen bestimmten Algorithmus steuern. Dieser Typ Steuerwerk hat den Vorteil, dass er äusserst kompakt bezüglich benötigter Chipfläche und effizient bezüglich Performance gebaut werden kann, da praktisch unbegrenzt viele Ereignisse parallel bearbeitet und beliebig viele Steuersignale parallel erzeugt werden können. Jedoch ist es nicht mehr möglich, dieses Steuerwerk nach der Produktion des Chips umzuprogrammieren. Im Folgenden wird dieser Typ Steuerwerk als as-HW-Steuerwerk (application specific Hardware) bezeichnet.

Wiederum bei einem weiteren Ausführungsbeispiel des erfindungsgemässen Prozessors kann mindestens ein Steuerwerk als Teil eines Funktionsblocks feinkörniger Granularität ausgebildet sein. Hierdurch wird es möglich, eine anwendungsspezifische Folge von Befehlen (Makro) für eine spezielle Aufgabe entweder in einem Teil des feinkörnigen Funktionsblocks fest abzuspeichern und sie bei Bedarf abzurufen, sodass dann die anwendungsspezifische Folge von Befehlen ausgeführt wird, oder aber eine entsprechende Sequenz von Befehlen überhaupt erst während der Abarbeitung eines Algorithmus an den feinkörnigen Funktionsblock in Form von Konfigurationsdaten zu übergeben, damit dieser dann die entsprechende Aufgabe abarbeiten kann. Im Folgenden wird dieser Typ Steuerwerk als r-HW-Steuerwerk (reconfigurable Hardware) bezeichnet und unterscheidet sich von einem as-HW-Steuerwerk primär dadurch, dass es reprogrammierbar ist.

Bei einem weiteren Ausführungsbeispiel des erfindungsgemässen Prozessors können mehrere Steuerwerke verschiedenen Typs eine sogenannte Steuerwerkgemeinschaft bilden. Eine solche Steuerwerkgemeinschaft mit Steuerwerken verschiedenen Typs ist insofern vorteilhaft gegenüber separaten Steuerwerken verschiedenen Typs, als bereits innerhalb der Steuerwerkgemeinschaft eine möglichst optimale Abarbeitung der verschiedenen Schritte eines Algorithmus festgelegt werden kann und dazu keine oder wenig Kommunikation zwischen separaten Steuerwerken erfolgen muss. Zum Beispiel können ein herkömmliches FD-Steuerwerk und ein as-FD-Steuerwerk sowie ein in der feinkörnigen Hardware implementiertes Steuerwerk (as-HW-Steuerwerk, r-HW-Steuerwerk) die anfallenden Aufgaben teilen. Hierbei könnte zum Beispiel das herkömmliche FD-Steuerwerk mit der Verarbeitung eines Datenstroms beginnen und gewisse Teile der Verarbeitung als Makro-Operation auf das spezialisierte Steuerwerk (as-HW-Steuerwerk) auslagern, wobei ersteres in der Zwischenzeit weitere Operationen ausführen kann. Das in der feinkörnigen Hardware implementierte Steuerwerk generiert währenddessen zum Beispiel Adressen, um auf Daten im Datenspeicher zugreifen zu können.

Weitere Arten von Steuerwerken sind zum Beispiel Kombinationen der oben erwähnten Steuerwerktypen, fest implementierte oder konfigurierbare Steuerwerke, die durch anti-fuse-Programmierung nach der Produktion konfiguriert werden, oder Schaltungen, deren Funktionalität erst durch die Metallmaske im Fertigungsprozess definiert wird.

Bei einem weiteren Ausführungsbeispiel des erfindungsgemässen Prozessors können einem FD-Steuerwerk Ressourcen wie ein Registerfile und Ausführungseinheiten zur ausschliesslichen Benutzung fest zugeteilt werden, was zusammen die wesentlichen Elemente einer CPU ergibt. Im weiteren kann selbiges FD-Steuerwerk Zugriff auf eine rekonfigurierbare Hardware-Einheit RFU haben. Somit kann die RFU verwendet werden zur Instruktionssatzerweiterung oder auch um Makro-Operationen auszuführen, gesteuert durch ein weiteres Steuerwerk. In diesem Fall kann das FD-Steuerwerk in dieser Zeit für andere Aufgaben zur Verfügung stehen.

Die Zugriffe der verschiedenen Steuerwerke auf die Funktionbslöcke der RFU werden durch eine CCU (Central Control Unit), eine zentrale Steuerung kontrolliert. Durch Steuerleitungen zu allen Funktionsblöcken der RFU und den angeschlossenen Steuerwerken werden die Operationen im aktuellen Arbeitszyklus (Taktzyklus) definiert. Die CCU tritt so quasi als Stellvertreter für ein oder mehrere Steuerwerke oder ein oder mehrere Steuerwerk-Gemeinschaften gegenüber den Funktionsblöcken der RFU auf.

Die CCU kontrolliert die Verteilung der Funktionsblöcke der RFU auf die aktiven Steuerwerke und Steuerwerk-Gemeinschaften. Bei Konflikten kann die Verteilung der Funktionsblöcke auf verschiedene Arten gelöst werden. Beispielsweise kann der Programmierer des Systems bestimmen, welchem Steuerwerk zu welcher Zeit, welche Ressource (Funktionsblock) zugeteilt werden soll.

Durch die Steuerung eines rekonfigurierbaren Netzwerks, welches alle Komponenten der RFU und die angeschlossenen Steuerwerke verbindet, kontrolliert die CCU den Datentransfer zwischen den Funktionsblöcken der RFU, den angeschlossenen Steuerwerken und externen Schnittstellen (Interfaces). Über diese Schnittstellen kann die CCU zum Beispiel Speicherblöcke in der RFU für eine externe DMA oder ein anderes Prozessorsystem freigeben, um direkt Daten zu empfangen oder bereitzustellen. Durch Steuersignale wird die Übergabe der Resultate an die externen Komponenten und die Steuerwerke geregelt, und im Fall von Verzögerungen der Berechnungen auf der RFU werden die entsprechenden Steuerwerke oder externen Schaltungen gestoppt.

Die rekonfigurierbare Hardware-Einheit RFU kann dementsprechend mindestens einen Speicherblock-umfassen, welcher so ausgebildet ist, dass während eines Arbeitszyklus das Einlesen oder Auslesen von Daten in den bzw. aus dem Speicherblock möglich ist. So kann z.B. während eines Arbeitszyklus das Einlesen oder Auslesen von Daten in bzw. aus dem Speicherblock über eine DMA erfolgen (siehe oben). Während eines Arbeitszyklus können auch Daten aus dem Speicherblock ausgelesen werden und noch im gleichen Arbeitszyklus können nach erfolgtem Auslesen der Daten schon wieder die nächsten Daten in den Speicherblock eingeschrieben werden.

Schliesslich kann die rekonfigurierbare Hardware-Einheit mindestens einen Funktionsblock umfassen, an dessen Ausgang ein Ausgangsregister vorgesehen ist, welches so ausgebildet ist, dass die Daten am Ausgang des Funktionsblocks (z.B. ALU, MAC, ADD) wahlweise entweder in dem Ausgangsregister gespeichert oder direkt weitergeleitet werden können. Durch diese Art von Ausgangsregister ist es möglich, das Ergebnis einer Operation zwischenzuspeichern oder es direkt weiterzuleiten ("by-pass") und wieder in ein anderes Register (z.B. in dasjenige einer als Steuerwerk fungierenden CPU) zu schreiben. Mit einem solchen Ausgangsregister können beispielsweise in einem einzigen Arbeitszyklus die Daten aus einem Ausgangsregister ausgelesen, in einem Funktionsblock verarbeitet und anschliessend wieder in ein Register geschrieben werden. Dies ermöglicht, die RFU quasi als Instruktionssatz-Erweiterung eines Prozessors zu verwenden, ohne dabei jedoch Taktzyklen zu verlieren.

Weitere Vorteile ergeben sich aus der nachfolgenden Beschreibung von Ausführungsbeispielen der Erfindung mit Hilfe der Zeichnung. Es zeigen:
- Fig. 1: ein Blockschaltbild zur Erläuterung des grundsätzlichen funktionellen Aufbaus eines Ausführungsbeispiels des erfindungsgemässen Prozessors,
- Fig. 2: das Blockschaltbild aus Fig. 1, wobei ein Steuerwerk als CPU ausgebildet ist,
- Fig. 3: das Blockschaltbild aus Fig. 1, wobei mehrere Steuerwerke eine Steuerwerkgemeinschaft bilden,
- Fig. 4: ein Ausführungsbeispiel einer rekonfigurierbaren Hardware-Einheit des erfindungsgemässen Prozessors,
- Fig. 5: ein weiteres Ausführungsbeispiel des erfindungsgemässen Prozessors,
- Fig. 6: ein weiteres Ausführungsbeispiel des erfindungsgemässen Prozessors mit Erläuterung einer speziellen Anwendung
und
- Fig. 7: ein Ausführungsbeispiel eines Ausgangsregisters am Ausgang eines grobkörnigen Funktionsblocks der rekonfigurierbaren Hardware-Einheit.

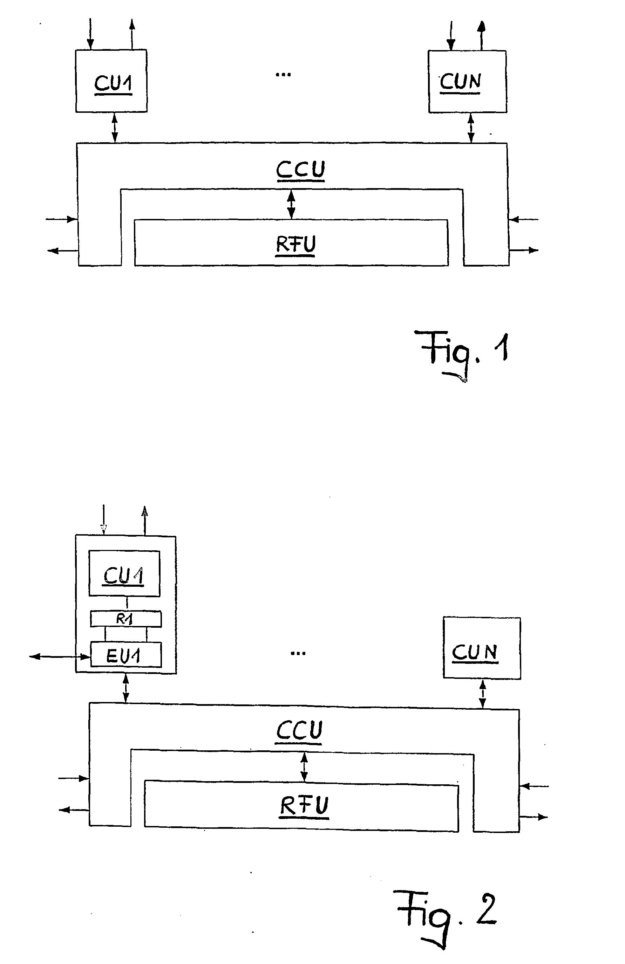

Bei dem in Fig. 1 gezeigten Ausführungsbeispiel des erfindungsgemässen Prozessors erkennt man mehrere Steuerwerke CU1,...,CUN, welche einerseits mit dritten Komponenten in Verbindung stehen (was durch Pfeile oberhalb des jeweiligen Steuerwerks angedeutet ist) und andererseits mit einer zentralen Steuereinheit CCU, was durch einen Doppelpfeil unterhalb des jeweiligen Steuerwerks angedeutet ist. Die zentrale Steuereinheit CCU steht ihrerseits mit einer rekonfigurierbaren Hardware-Einheit RFU (Reconfigurable Functional Unit) in Verbindung, was ebenfalls durch einen Doppelpfeil angedeutet ist. Die Pfeilspitzen verdeutlichen dabei jeweils, in welcher Richtung ein Informationsfluss stattfinden kann.

Die einzelnen Steuerwerke CU1,...,CUN können alle von verschiedenem Typ sein, mindestens sind jedoch zwei Steuerwerke von verschiedenem Typ. Was dabei die Bezeichnung "von verschiedenem Typ" heissen soll, ist bereits weiter oben ausführlich erläutert. So können die Steuerwerke beispielsweise vom Typ FD, as-FD, as-HW oder r-HW sein, und zwar grundsätzlich in beliebigen Kombinationen.

Im Rahmen der Abarbeitung der Aufgaben eines Algorithmus können die einzelnen Aufgaben auf die verschiedenen Steuerwerke CU1,...,CUN übertragen werden, welche dann unter der Kontrolle der zentralen Steuerung CCU auf die Hardware-Ressourcen der RFU zugreifen können. Dabei sind die Hardware-Ressourcen der RFU grundsätzlich von allen Steuerwerken CU1,...,CUN nutzbar, weshalb sie "gemeinsame" Hardware-Ressourcen sind. Die zentrale Steuerung CCU kann dabei zusätzlich noch mit externen Schnittstellen in Verbindung stehen, was durch seitlich angeordnete Pfeile angedeutet ist, um beispielsweise zuzulassen, dass während eines Arbeitszyklus (Taktzyklus) über die Schnittstellen Daten in von den Steuerwerken gerade nicht genutzte Speicherblöcke der RFU geschrieben werden können.

In Fig. 2 erkennt man ein Ausführungsbeispiel des Prozessors in einem Blockschaltbild ähnlich wie dasjenige in Fig. 1, allerdings ist hier das Steuerwerk CU1 Bestandteil einer konventionellen CPU, denn ausser dem Steuerwerk CU1 sind in der CPU auch noch ein Registerfile R1, bestehend aus einem oder mehreren Registern, sowie Ausführungseinheiten EU1 vorgesehen. Ein Steuerwerk CU1, ein Registerfile R1 sowie Ausführungseinheiten EU1 bilden zusammen aber die wesentlichen Bestandteile einer herkömmlichen CPU.

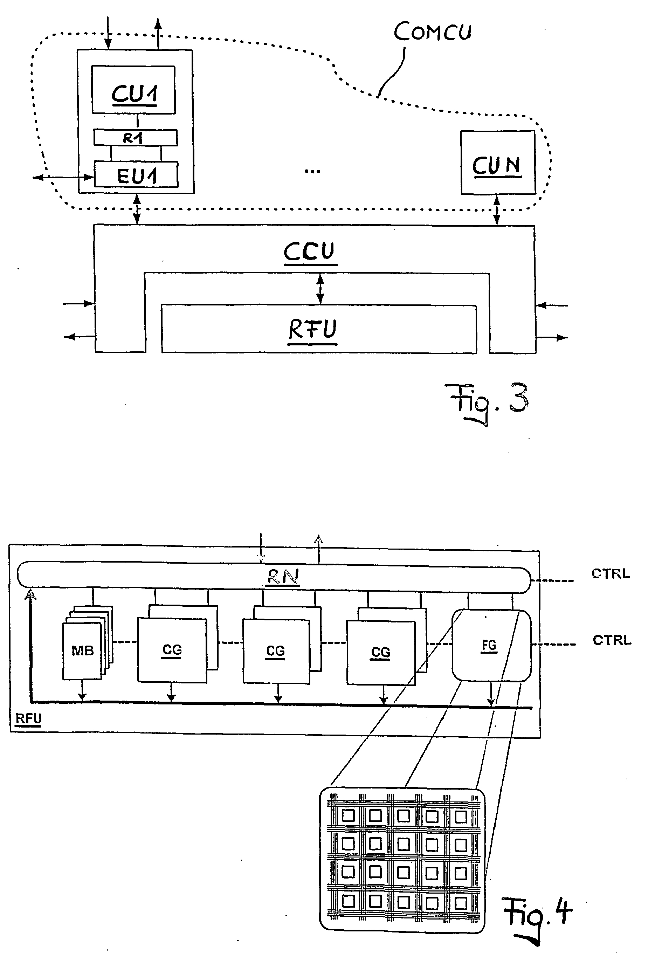

Fig. 3 zeigt wieder ein ähnliches Blockschaltbild wie Fig. 1 und Fig. 2, allerdings bilden hier die Steuerwerke CU1,...,CUN eine Steuerwerkgemeinschaft COMCU ("Combined Control Unit"). Grundsätzlich können bereits zwei Steuerwerke eine Steuerwerkgemeinschaft bilden, es müssen nicht sämtliche Steuerwerke CU1,...,CUN eine Steuerwerkgemeinschaft bilden. Es können auch gleichzeitig mehrere Steuerwerkgemeinschaften (COMCUs) aus den vorhandenen Steuerwerken gebildet werden. Eine solche Steuerwerkgemeinschaft COMCU mit Steuerwerken verschiedenen Typs ist insofern vorteilhaft gegenüber separaten Steuerwerken verschiedenen Typs, als bereits innerhalb der Steuerwerkgemeinschaft eine möglichst optimale Abarbeitung der verschiedenen Schritte eines Algorithmus festgelegt werden kann und dazu keine oder nur geringe "externe" Kommunikation zwischen separaten Steuerwerken erfolgen muss. So können beispielsweise ein herkömmliches FD-Steuerwerk und ein as-FD-Steuerwerk sowie ein in der feinkörnigen Hardware implementiertes Steuerwerk (as-HW-Steuerwerk, r-HW-Steuerwerk) die anfallenden Aufgaben teilen. Hierbei könnte zum Beispiel das herkömmliche FD-Steuerwerk mit der Verarbeitung eines Datenstroms beginnen und gewisse Teile der Verarbeitung als Makro-Operation auf das spezialisierte Steuerwerk (as-HW-Steuerwerk) auslagern, wobei ersteres in der Zwischenzeit weitere Operationen ausführen kann. Das in der feinkörnigen Hardware implementierte Steuerwerk generiert währenddessen zum Beispiel Adressen, um auf Daten im Datenspeicher zugreifen zu können. Dies soll lediglich als Beispiel dafür dienen, wie solche Steuerwerkgemeinschaften auf besonders effiziente Weise arbeiten können.

In Fig. 4 erkennt man ein Ausführungsbeispiel der rekonfigurierbaren Hardware-Einheit RFU in einem etwas detaillierteren Blockschaltbild. Die RFU umfasst mehrere Funktionsblöcke MB,CG,FG sowie ein rekonfigurierbares Netzwerk RN, welches die einzelnen Funktionsblöcke untereinander und ausserdem die RFU mit der zentralen Steuerung CCU (in Fig. 4 nicht dargestellt) verbindet. Die Verbindung zur CCU ist durch die beiden Pfeile am oberen Ende des rekonfigurierbaren Netzwerks RN angedeutet, wodurch erkennbar sein soll, dass der Informationsaustausch bidirektional, also in beiden Richtungen, erfolgen kann. Ausserdem erkennt man in Fig. 4 noch, dass sowohl die einzelnen Funktionsblöcke MB,CG,FG als auch das rekonfigurierbare Netzwerk RN durch die zentrale Steuerung CCU (hier nicht dargestellt) gesteuert werden, was durch die gestrichelten Linien CTRL angedeutet ist. Da die Hardware-Einheit RFU rekonfigurierbar ist, kann ihre Funktion im Betrieb, also dynamisch, verändert werden. Dies erfolgt mit Hilfe der CCU, die über entsprechende Konfigurationsdaten zu jedem Zeitpunkt die jeweilige Funktionalität der RFU festlegt.

Die einzelnen Funktionsblöcke der RFU aus Fig. 4 können bezüglich ihrer Funktion oder bezüglich ihrer Granularität noch näher spezifiziert werden. So sind die Funktionsblöcke MB Speicherblöcke, während die Funktionsblöcke CG ihre Bezeichnung aus dem Grund erhalten haben, weil sie von einer grobkörnigen Struktur sind. Insbesondere verbergen sich dahinter beispielsweise Ausführungseinheiten wie ALUs,MACs,ADDs und so weiter (siehe weiter oben), deren Vorteile eingangs bereits beschrieben worden sind. Der Funktionsblock FG - in Fig. 4 ist nur ein solcher Funktionsblock FG dargestellt, es können aber auch mehrere solcher Funktionsblöcke FG vorgesehen sein - bezeichnet einen Funktionsblock von feinkörniger Struktur. Auch die Vorteile solcher feinkörnigen Funktionsblöcke FG sind bereits eingangs beschrieben, in Fig. 4 ist ein Ausführungsbeispiel eines solchen feinkörnigen Funktionsblocks FG in Form von FPGA-ähnlichen Strukturen (Field Programmable Gate Array) dargestellt.

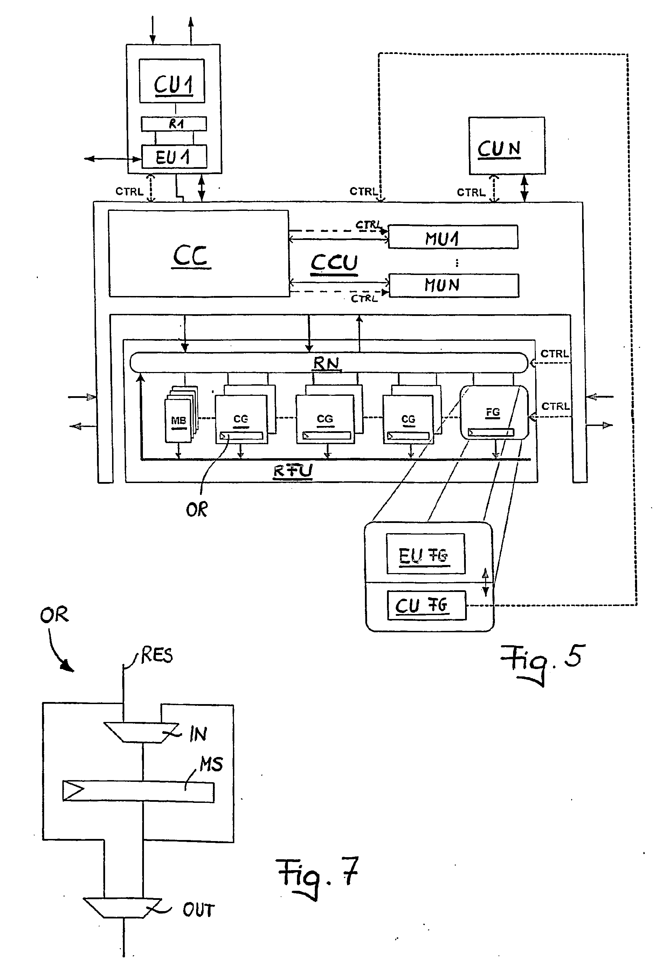

In Fig. 5 ist ein weiteres Ausführungsbeispiel eines erfindungsgemässen Prozessors zu erkennen. Man erkennt wieder die Steuerwerke CU1,...,CUN wobei das Steuerwerk CU1 hier wieder als herkömmliche CPU ausgebildet ist. Weiterhin erkennt man aus Fig. 5 besonders gut, dass ein Teil des feinkörnigen Funktionsblocks FG der RFU ebenfalls als Steuerwerk fungieren kann. Dies lässt sich beispielsweise über die Konfigurationsdaten der RFU (sogar dynamisch) steuern. Der feinkörnige Funktionsblock FG kann dabei wieder ähnlich einem FPGA ausgebildet sein, und ein Teil des FG-Funktionsblocks kann dabei als Ausführungseinheit EUFG fungieren, während ein anderer Teil des FG-Funktionsblocks als Steuerwerk CUFG fungiert. Auch das Steuerwerk CUFG steht mit der zentralen Steuerung CCU kommunizierend in Verbindung, die letztlich die Zuweisung der Ressourcen der RFU festlegt. In Fig. 5 sind der besseren Übersicht wegen sämtliche Kommunikationswege, auf denen Steuersignale kommuniziert werden, gestrichelt dargestellt.

Über externe Schnittstellen können über die CCU Daten z.B. an die Speicherblöcke MB der RFU übergeben werden, und zwar kann dies sogar innerhalb eines Arbeitstaktes der Steuerwerke erfolgen. Während also innerhalb eines Arbeitszyklus innerhalb der RFU bestimmte Operationen ausgeführt werden, können beispielsweise Daten, die für nachfolgende Operationen benötigt werden, über externe Schnittstellen oder über eine DMA bereits in gerade nicht benötigte Speicherblöcke MB eingeschrieben werden, sodass diese Daten für die Verarbeitungsschritte im nächsten Arbeitszyklus bereits bereit stehen und nicht ein weiterer Arbeitszyklus benötigt wird, um diese Daten überhaupt erst in die Speicherblöcke zu schreiben.

Weiterhin erkennt man in Fig. 5 noch Speichereinheiten MU1,...,MUN, welche der zentralen Steuerung CCU zugeordnet sind.Die Speichereinheiten MU1,...,MUN enthalten die Konfigurationsdaten, welche definieren, welche Operationen in den Ausführungseinheiten ausgeführt werden und wie Daten- und Kommunikationspfade im rekonfigurierbaren Netzwerk RN zu schalten sind. Es ist möglich, jedem zu konfigurierenden Element in der RFU eine eigene Speichereinheit MU zuzuteilen, oder aber in einer Speichereinheit MU die Konfigurationsdaten für mehrere zu konfigurierende Elemente zu speichern.

In einem weiteren Ausführungsbeispiel können die Speichereinheiten MU sowie der Instruktionsspeicher von FD Steuerwerken in einem einzigen physischen Speicherblock kombiniert werden. Dies eröffnet die Möglichkeit, wahlweise mehr Konfigurationsdaten oder ein grösseres Programm für das FD-Steuerwerk im Speicherblock abzulegen.

Die in den Speichereinheiten MU abgelegten Konfigurationsdaten werden durch den zentralen Controller CC, abhängig von den Steuersignalen der Steuerwerke CU, an die RFU angelegt, und entsprechend wird die Funktionalität der Ausführungseinheiten (MB, CG, FG) und des rekonfigurierbaren Netzwerkes RN in der RFU beeinflusst.

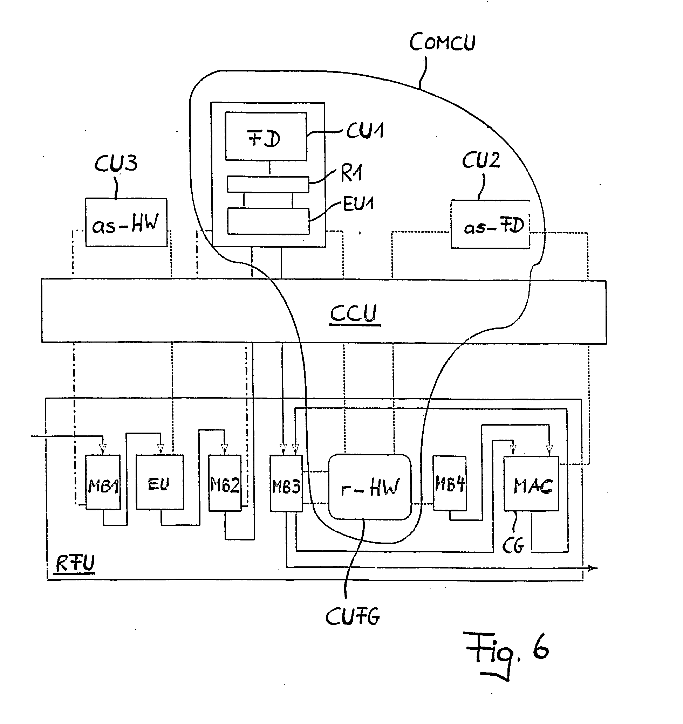

Bei dem in Fig. 6 gezeigten Ausführungsbeispiel erkennt man wieder das Steuerwerk CU1, welchem das Registerfile R1 und die Ausführungseinheiten EU1, welche zusammen wieder eine herkömmliche CPU bilden. Das Steuerwerk CU1 ist dabei ein Steuerwerk vom Typ FD ("Fetch Decode", siehe weiter oben). Ausserdem erkennt man das Steuerwerk CU2, welches vom Typ as-FD ist ("application specific Fetch Decode", siehe weiter oben), sowie ein weiteres Steuerwerk CUFG vom Typ r-HW ("reconfigurable Hardware"), welches Teil eines feinkörnigen Funktionsblocks, z.B. eines FPGA ist (siehe auch Fig. 5). Diese drei Steuerwerke bilden eine Steuerwerkgemeinschaft COMCU ("combined control unit"). Schliesslich erkennt man ein weiteres Steuerwerk CU3 vom Typ as-HW ("application specific Hardware", siehe weiter oben). Schliesslich erkennt man noch die rekonfigurierbare Hardware-Einheit RFU mit mehreren Funktionsblocks, auf welche nachfolgend noch eingegangen wird.

Die Arbeitsweise kann beispielsweise wie folgt sein. Ein komprimierter Datenstrom wird vom Speicherblock MB1 empfangen, der zum Beispiel nach dem FIFO-Prinzip arbeitet (First-In-First-Out). Sobald der Speicherblock MB1 Daten erhält, wird diese Information an das Steuerwerk CU3 vom Typ as-HW geleitet. Dieses beginnt, mit Hilfe von Ausführungseinheiten EU der RFU die Daten zu dekomprimieren und im Speicherblock MB2 zu speichern. Das Steuerwerk CU1 (FD-Steuerwerk) liest ein Paket von Daten aus dem Speicherblock MB2 aus, trennt die Daten in Paket-Header und Nutzdaten auf, und speichert die Nutzdaten im Speicherblock MB3. Danach gibt das Steuerwerk CU1 gemeinschaftsintern dem Steuerwerk CU2 vom Typ as-FD den Befehl, die Daten beispielsweise mit einer mathematischen Funktion zu bearbeiten (z.B. Filtern) und holt das nächsten Paket von Daten aus dem Speicherblock MB2. Das Steuerwerk CU2 (Typ:as-FD) beginnt in der Zwischenzeit mit Hilfe eines grobkörnigen Funktionsblocks CG (z.B. vom Typ MAC, siehe weiter oben), die Nutzdaten mit Konstanten, die im Speicherblock MB4 gespeichert sind, zu bearbeiten und anschliessend wieder in den Speicherblock MB3 zu speichern. Dabei generiert das in dem feinkörnigen Funktionsblock implementierte Steuerwerk CUFG die Adressen für die Speicherblöcke MB3 und MB4. So kann man sich als Beispiel die Arbeitsweise eines solchen Prozessors vorstellen, wobei die beschriebenen Operationen gleichzeitig "pipelined" ausgeführt werden.

Zurückkommend zu Fig. 5 erkennt man dort bei den Funktionsblöcken CG und FG andeutungsweise am Ausgang ein Ausgangsregister ("Output Register") OR, welches in Fig. 7 in Form eines Ausführungsbeispiels für ein solches Ausgangsregister OR noch einmal deutlicher dargestellt ist. Man erkennt, dass beispielsweise das Ergebnis RES einer Operation, welche in einem Funktionsblock CG oder FG durchgeführt worden ist und dann am Eingang IN des Registers OR liegt, entweder in eine Speicherstufe MS des Registers OR geschrieben werden kann, oder direkt dem Ausgang OUT des Registers zugeführt und von dort noch im gleichen Arbeitszyklus weitergeleitet werden kann. Es ist also möglich, ein Ergebnis RES einer Operation entweder zwischenzuspeichern (Speicherstufe MS) oder es direkt weiterzuleiten ("by-pass") oder es sogar über mehrere Arbeitszyklen zu halten ("hold") . Beim Halten wird einfach das gespeicherte Ergebnis RES aus der Speicherstufe ausgelesen und dann wieder in die Speicherstufe MS eingelesen. Dies kann so lange erfolgen, bis ein neues Ergebnis in die Speicherstufe MS geschrieben werden soll. Spätestens dann muss entweder das neue Ergebnis oder das gehaltene Ergebnis in einen Speicherblock MB oder ein anderes Register geschrieben werden. Grundsätzlich ist aber klar, dass bei dem Ausgangsregister OR sowohl die Möglichkeit besteht, das Ergebnis RES eines Funktionsblocks entweder direkt weiterzuleiten ("by-pass"), es in einen Speicherblock MS zu schreiben und es dort für einen Arbeitszyklus zu speichern, oder es zu halten ("hold").

## Patentansprüche

1. Prozessor mit mehreren Steuerwerken (CU1, CU2,..., CUN, CUFG, COMCU) sowie mit Funktionsblöcken (MB,CG,FG), auf welche die Steuerwerke (CU1, CU2, ... , CUN, CUFG, COMCU) gemeinsam zugreifen können, und mit einer zentralen Steuerung (CCU), welche den Zugriff der Steuerwerke (CU1, CU2, ..., CUN, CUFG, COMCU) auf die Funktionsblöcke (MB,CG,FG) festlegt, wobei mindestens zwei Steuerwerke als Steuerwerke von verschiedenem Typ (FD,as-FD,as-HW,r-HW) ausgebildet sind.

2. Prozessor nach Anspruch 1, bei welchem mindestens ein Steuerwerk vom Typ "Fetch Decode" (FD) ist.

3. Prozessor nach einem der Ansprüche 1 oder 2, bei welchem mindestens ein Steuerwerk vom Typ "application specific Fetch Decode" (as-FD) ist.

4. Prozessor nach einem der Ansprüche 1 bis 3, bei welchem mindestens ein Steuerwerk vom Typ "application specific Hardware" (as-HW) ist.

5. Prozessor nach einem der Ansprüche 1 bis 4, bei welchem mindestens ein Steuerwerk als Teil eines Funktionsblocks feinkörniger Granularität ausgebildet (r-HW) ist.

6. Prozessor nach einem der Ansprüche 1 bis 5, bei welchem mehrere Steuerwerke (CU1, CU2, CUFG) verschiedenen Typs (FD,as-FD,r-HW) eine Steuerwerkgemeinschaft (COMCU) bilden.

7. Prozessor nach einem der vorangehenden Ansprüche, bei welchem eine separate rekonfigurierbare Hardware-Einheit (RFU) vorgesehen ist, welche Funktionsblöcke (MB,CG,FG) umfasst, auf welche die Steuerwerke (CU1, CU2, ..., CUN, CUFG, COMCU) gemeinsam zugreifen können.

8. Prozessor nach Anspruch 7, bei welchem die rekonfigurierbare Hardware-Einheit (RFU) mindestens einen Speicherblock (MB;MB1,MB2,MB3,MB4) umfasst, welcher so ausgebildet ist, dass während eines Arbeitszyklus das Einlesen oder Auslesen von Daten in den bzw. aus dem Speicherblock möglich ist.

9. Prozessor nach einem der Ansprüche 7 oder 8, bei welchem die rekonfigurierbare Hardware-Einheit (RFU) mindestens einen Funktionsblock (CG,FG) umfasst, an dessen Ausgang ein Ausgangsregister (OR) vorgesehen ist, welches so ausgebildet ist, dass die Daten am Ausgang des Funktionsblocks je wahlweise entweder in dem Ausgangsregister (OR) gespeichert oder direkt weitergeleitet werden können.

## Claims

1. Processor having a plurality of control units (CU1, CU2, ..., CUN, CUFG, COMCU) and also having function blocks (MB, CG, FG) which can be accessed by the control units (CU1, CU2, ..., CUN, CUFG, COMCU) jointly, and having a central controller (CCU) which defines the access by the control units (CU1, CU2, ..., CUN, CUFG, COMCU) to the function blocks (MB, CG, FG), wherein at least two control units are in the form of control units of a different type (FD, as-FD, as-HW, r-HW).

2. Processor according to claim 1, in which at least one control unit is of the type "Fetch Decode" (FD).

3. Processor according to any one of claims 1 or 2, in which at least one control unit is of the type "application specific Fetch Decode" (as-FD).

4. Processor according to any one of claims 1 to 3, in which at least one control unit is of the type "application specific Hardware" (as-HW).

5. Processor according to any one of claims 1 to 4, in which at least one control unit is in the form of part of a function block with fine-grained granularity (r-HW).

6. Processor according to any one of claims 1 to 5, in which a plurality of control units (CU1, CU2, CUFG) of different types (FD, as-FD, r-HW) form a combined control unit (COMCU).

7. Processor according to any one of the preceding claims, in which a separate reconfigurable hardware unit (RFU) is provided which comprises function blocks (MB, CG, FG) which can be accessed by the control units (CU1, CU2, ..., CUN, CUFG, COMCU) jointly.

8. Processor according to claim 7, in which the reconfigurable hardware unit (RFU) comprises at least one memory block (MB; MB1, MB2, MB3, MB4) which is designed such that during an operating cycle it is possible to read data to or from the memory block.

9. Processor according to any one of claims 7 or 8, in which the reconfigurable hardware unit (RFU) comprises at least one function block (CG, FG) at the output of which an output register (OR) is provided which is designed such that the data at the output of the function block can selectively either be stored in the output register (OR) or be forwarded directly.

## Revendications

1. Processeur comportant plusieurs unités de commande (CU1, CU2, ..., CUN, CUFG, COMCU) ainsi que des blocs fonctionnels (MB, CG, FG) auxquels les unités de commande (CU1, CU2, ..., CUN, CUFG, COMCU) peuvent accéder en commun ainsi qu'une commande centrale (CCU) qui fixe l'accès des unités de commande (CU1, CU2, ..., CUN, CUFG, COMCU) aux blocs fonctionnels (MB, CG, FG),
au moins deux unités de commande étant réalisées comme unités de commande de types différents (FD, as-FD, as-HW, r-HW).

2. Processeur selon la revendication 1,
selon lequel
au moins une unité de commande est du type « Fetch Decode » (FD).

3. Processeur selon une des revendications 1 ou 2,
selon lequel
au moins une unité de commande est du type « application specific Fetch Decode » (FD).

4. Processeur selon une des revendications 1 à 3,
selon lequel
au moins une unité de commande est du type « application specific Hardware » (as-HW).

5. Processeur selon une des revendications 1 à 4,
selon lequel
au moins une unité de commande fait partie d'un bloc fonctionnel à granulométrie fine (r-HW).

6. Processeur selon une des revendications 1 à 5,
selon lequel
plusieurs unités de commande (CU1, CU2, CUFG) de différents types (FD, as-FD, r-HW) forment une communauté d'unités de commandes (COMCU).

7. Processeur selon une des revendications précédentes,
selon lequel
une unité de circuit (RFU) reconfigurable séparée st prévue, qui comprend des blocs fonctionnels (MB, CG, FG) auxquels les unités de commande (CU1, CU2, ..., CUN, CUFG, COMCU) peuvent accéder en commun.

8. Processeur selon la revendication 7,
selon lequel
l'unité de circuit reconfigurable (RFU) comprend au moins un bloc mémoire (MB, MB1, MB2, MB3, MB4) réalisé pour qu'au cours d'un cycle de travail il soit possible de lire et d'extraire des données du bloc mémoire.

9. Processeur selon une des revendications 7 ou 8,
selon lequel
l'unité de circuit reconfigurable (RFU) comprend au moins un bloc fonctionnel (CG, FG) dont la sortie est munie d'un registre de sortie (OR) conçu pour mémoriser dans le registre de sortie (OR) les données à la sortie du bloc fonctionnel, ou pour les transmettre directement.
